# FASCICULE DE BREVET EUROPEEN

(11) **EP 1 189 509 B1**
(45) Date de publication et mention de la délivrance du brevet: **07.09.2005**
(21) Numéro de dépôt: 00949558.1
(22) Date de dépôt: 23.06.2000
(51) Int. Cl.: A01N 43/16

(54) **UTILISATION DE POLYSACCHARIDES ET D'OLIGOSACCHARIDES GLYCURONIQUES EN TANT QUE PRODUITS PHYTOSANITAIRES ET/OU FERTILISANTS**
VERWENDUNG VON GLYCURONPOLYSACCHARIDEN UND OLIGOSACCHARIDEN ALS PFLANZENSCHUTZMITTEL UND/ODER ALS DÜNGEMITTEL
USE OF GLYCURONIC POLYSACCHARIDES AND OLIGOSACCHARIDES AS PHYTOSANITARY PRODUCTS AND/OR FERTILISERS

(30) Priorité: 25.06.1999 FR 9908135
(43) Date de publication de la demande: 27.03.2002
(73) Titulaire: Centre National de la Recherche Scientifique, 75794 Paris Cedex 16 (FR)
(72) Inventeur: LIENART, Yvette, F-38410 Uriage (FR); HEYRAUD, Alain, F-38113 Veurey-Voroize (FR); SEVENOU, Olivier, Kegworth DE74 2DA (GB)
(74) Mandataire: Grosset-Fournier, Chantal Catherine
(86) Numéro de dépôt international: PCT/FR2000/001761
(87) Numéro de publication internationale: WO 2001/000025

(56) Documents cités:
- DE-A- 3 338 689
- FR-A- 2 605 185
- FR-A- 2 688 222
- US-A- 4 993 185
- DATABASE WPI Section Ch, Week 199301 Derwent Publications Ltd., London, GB; Class C06, AN 1993-006210 XP002134848 & JP 04 335839 A (MEIJI SEIKA KAISHA), 24 novembre 1992 (1992-11-24)
- PATENT ABSTRACTS OF JAPAN vol. 1996, no. 2, 29 février 1996 (1996-02-29) & JP 07 274725 A (MEIJI SEIKA), 24 octobre 1995 (1995-10-24)
- DATABASE CROPU [en ligne] retrieved from STN-INTERNATIONAL, accession no. 1998-85656 XP002134847 & JP 10 066449 A (MEIJI-SEIKA) 10 mars 1998 (1998-03-10)
- DATABASE WPI Section Ch, Week 199402 Derwent Publications Ltd., London, GB; Class B04, AN 1994-010974 XP002150689 & JP 05 316997 A (POLA CHEM IND INC), 3 décembre 1993 (1993-12-03) & US 5 952 308 A 14 septembre 1999 (1999-09-14)
- DATABASE WPI Section Ch, Week 199434 Derwent Publications Ltd., London, GB; Class B04, AN 1994-275523 XP002134849 & JP 06 205687 A (AOMORI KEN), 26 juillet 1994 (1994-07-26)
- DATABASE BIOSIS [en ligne] BIOSCIENCES INFORMATION SERVICE, PHILADELPHIA, PA, US; M.M.PURUGGANAN ET AL.: "The Arabidopsis TCH4 xyloglucan endotransglycosylase: Substrate specificity, pH optimum, and plant tolerance" retrieved from EPOQUE, accession no. PREV199799760116 XP002150688 & PLANT PHYSIOLOGY, vol. 115, 1997, pages 181-190,
- DATABASE WPI Section Ch, Week 199935 Derwent Publications Ltd., London, GB; Class C06, AN 1999-411829 XP002150690 & JP 11 164688 A (TAKARA SHUZO CO LTD), 22 juin 1999 (1999-06-22)

## Description

La présente invention a pour objet l'utilisation de polymères 1,4 β-D-glucuronanes, et d'oligosaccharides glycuroniques dérivés, en tant que produits phytosanitaires et/ou fertilisants.

L'enzyme 1,3-β-D-glucanase est un marqueur de réactions de défense chez les végétaux. Au cours de réactions d'hypersensibilité à un pathogène (bactéries, champignons, virus) la plante réagit en induisant la synthèse de protéines spécifiques nommées "PR-protéines" (Sintzi A. et al. (1993) Biochimie, 75, 687-706). Ces protéines liées à la pathogénèse concourent, avec d'autres molécules (comme l'acide salicylique) au développement d'une résistance au pathogène. Selon leurs propriétés biochimiques, et leur fonction physiologique, ces protéines sont répertoriées en plusieurs groupes. Elles présentent, en commun, les caractéristiques suivantes: bas poids moléculaire, composition le plus souvent monomèrique, leur résistance à la protéolyse, leur stabilité en milieu acide ou à des températures extrêmes, leur association à des membranes plasmiques ou endoplasmiques, leur localisation pariétale. Parmi, ces PR-protéines se situe le groupe 2 composé d'enzymes 1,3 β-D-glucanases, qui reconnaissent comme substrats des chaînes 1,3 β-D-glucanes. Le rôle de ces protéines dans la défense de la plante repose sur leur capacité à lyser les parois des pathogènes riches en 1,3 β-D-glucanes (Boller T. (1993) In mechanisms of Plant defenses responses. Fritig B. Legrand M. eds. Kluwer. Academic Publishers Dordrecht, 391-400.

Cependant, cette activité enzymatique n'est pas seulement impliquée dans la défense des plantes. En effet, elle peut être régulée par des phytohormones et elle peut être induite à certains stades de développement de la plante. A ce titre, l'enzyme 1,3-β-D-glucanase est un marqueur de croissance et/ou de différenciation cellulaire chez les végétaux.

Cette enzyme comme d'ailleurs un certain nombre de PR-protéines (inhibiteurs de protéase, chitinases, protéines régulant l'expression de gènes codant pour l'osmotine) sont associées à la croissance et/ou à la différenciation cellulaire ou bien à des processus d'adaptation à l'environnement. Certaines de ces protéines sont reconnues par des anticorps dirigés contre des 1,3-β-D-glucanases isolées du tabac contaminé par la mosaïque du tabac (Kauffmann et al. (1990) Plant Mol. Biol., 14(3) : 381-90).

Des activités 1,3-β-D-glucanases ou les gènes codant pour ces protéines sont induit(e)s au cours de la germination, du développement des bourgeons floraux, des fruits (del Campillo E., Lewis L.N. (1992) Plant Physiology 99, 1015-1020; Neale et al. (1990) Plant Cell 2, 7, 673-684). En particulier, ces réponses se développent dans des tissus en voie de remaniements cataboliques (endosperme, tubes polliniques, zones d'abscission de tiges, de pédoncules..) ou en période de division mitotique (cas des anthères, des stigmas, de tiges). Elles sont sous dépendance hormonale (auxines, cytokinines en général, acide abscissique en particulier), et des molécules comme l'éthylène, contrôlant la maturation des fruits, ou l'acide salicylique, contrôlant la floraison, sont également des inducteurs. Enfin, des enzymes 1,3 β-D-glucanases ont été répertoriées pour des fonctions d'adaptation de la plante au froid et à des teneurs élevées en ozone (Hincha et al. (1997) Plant physiology 114, 1077-1083).

L'enzyme 1,4-β-D-glucanase est un marqueur de croissance et/ou de différenciation cellulaire chez les végétaux. Cette enzyme reconnaît comme substrat des chaînes linéaires de glucanes liés en β (1,4). Elle peut hydrolyser la cellulose, des glucanes β (1,4) (1,6), le xyloglucane. Ainsi, elle intervient dans les remaniements ultrastructuraux des parois des cellules végétales en cours de croissance. Son induction et/ou celle des gènes spécifiques se décèlent au cours des processus impliquant la lyse des parois végétales, rupture des anthères, zones d'abscission de fruits, de fleurs (Hayaschi T., Oshimi C. (1994) Plant Cell Physiology 35(3), 419-424; Brummel D.A. et al. (1997) Plant Biol. Mol. 33, 1, 97-195). Elle est contrôlée par l'éthylène, par des hormones comme l'acide abscissique ou l'auxine.

L'activité xyloglucane endotransglycolase induit la modification des xyloglucanes des parois des cellules végétales en réponse à des stimuli environnementaux tels que la pression mécanique, le vent, l'obscurité, et les chocs thermiques (Xu et al. (1996) Plant J. 9(6), 879-89; Antosiewicz et al. (1997), 115(4), 1319-28).

La présente invention découle de la mise en évidence par les inventeurs du fait que les polymères 1,4 β-D-glucuronanes et les oligosaccharides glycuroniques dérivés de ces derniers, ont des activités d'amplification de l'enzyme 1,3 β-D-glucanase, et/ou de l'enzyme 1,4 β-D-glucanase, et/ou de l'enzyme xyloglucane endotransglycolase, et, à ce titre, sont désignés composés "éliciteurs", susceptibles d'être utilisés dans le cadre d'applications phytosanitaires ou de fertilisation.

Les polymères 1,4 β-D-glucuronanes ont déjà été décrits dans le brevet français FR-B-2 688 222 du 3 mars 1992, dans des domaines d'utilisation totalement différents de ceux susmentionnés de la présente invention, à savoir dans les domaines alimentaire, pharmaceutique en thérapeutique humaine ou vétérinaire, cosmétique ou de l'épuration des eaux, en particulier en tant que moyen gélifiant, épaississant, hydratant, stabilisant, chélatant ou floculant, ainsi que dans la préparation d'oligosaccharides.

La présente invention a pour but de fournir des composés utilisables en tant "qu'éliciteurs" entrant dans la composition de fertilisants (engrais, fertilisants biologiques ou biofertilisants), et de produits phytosanitaires.

Un des buts de la présente invention est de fournir de nouveaux biofertilisants utilisables notamment comme stimulants de la nutrition en complément ou en remplacement de produits commerciaux à base de potasse et de nitrates toxiques pour l'environnement, et/ou comme régulateurs d'une ou plusieurs étapes du développement des plantes.

Un autre but de la présente invention est de fournir de nouveaux produits phytosanitaires utilisables notamment comme activateurs des réactions de défense et de résistance contre des contraintes biotiques ou abiotiques en complément ou en remplacement de pesticides toxiques pour l'environnement.

La présente invention a pour objet l'utilisation des oligo 1,4 β-D-mannuronanes, dont le DP (degré de polymérisation) est inférieur à environ 30, en tant que :
- produits phytosanitaires pour la protection des plantes contre les pathogènes ou des prédateurs, et l'adaptation des plantes à des teneurs élevées en ozone, dans le cadre de l'activation de la 1,3 β-D-glucanase,
- produits biofertilisants pour le contrôle de l'abscission, de la croissance du pistil ou de la maturation des anthères, le contrôle de l'organisation des parois cellulaires au cours de l'expansion des tissus, et pour renforcer les parois végétales, dans le cadre de l'activation de la 1,3 β-D-glucanase, de la 1,4 β-D-glucanase, et de la xyloglucane endotransglycolase.

Parmi les plantes susceptibles d'être traitées dans le cadre de la présente invention, on peut citer la vigne, les arbres fruitiers, les cultures céréalières et maraîchères ou tout autre végétal d'intérêt économique.

L'invention a plus particulièrement pour objet l'utilisation susmentionnée, des oligo 1,4 β-D-mannuronanes cités ci-dessus, en tant que produits phytosanitaires dans le cadre d'applications liées à leur activité d'amplification de l'enzyme 1,3 β-D-glucanase, telles que la protection des plantes contre des pathogènes ou des prédateurs, notamment contre les bactéries, virus, champignons, insectes, nématodes, ou l'adaptation des plantes à des teneurs élevées en ozone.

On entend dans ce qui suit par l'expression "oligosaccharide de degré de polymérisation x (DPx)" des oligosaccharides constitués du même nombre x d'unités saccharidiques, et par l'expression "oligosaccharide de degré de polymérisation moyen x (DP moyen x)" des oligosaccharides constitués d'un nombre variable d'unités saccharidiques et dont la moyenne correspond au nombre x.

Des dérivés oligo 1,4 β-D-mannuronanes préférés en tant que produits phytosanitaires, sont choisis parmi les oligo 1,4 β-D-mannuronanes, dont le DP est compris entre 2 et 15, et plu particulièrement l'oligo 1,4 β-D-mannuronane de DP4.

L'invention a également pour objet un procédé d'obtention de plantes résistantes aux pathogènes ou prédateurs susmentionnés, ou adaptées à des teneurs élevées en ozone, par traitement de plantes avec des oligo 1,4 β-D-mannuronanes tels que définis ci-dessus, en vue de l'obtention de plantes résistantes aux pathogènes susmentionnés ou adaptées à des teneurs élevées en ozone.

L'invention concerne également l'utilisation des composés choisis parmi ceux cités ci-dessus, en tant que produits biofertilisants pour le contrôle de l'abscission, de la croissance du pistil ou de la maturation des anthères, le contrôle de l'organisation des parois cellulaires au cours de l'expansion des tissus, et pour renforcer les parois végétales, dans le cadre d'applications liées à leur activité d'amplification de l'enzyme 1,3 β-D-glucanase, et/ou de l'enzyme 1,4 β-D-glucanase, et/ou de l'enzyme xyloglucane endotransglycolase.

L'invention a plus particulièrement pour objet l'utilisation susmentionnée, des oligo 1,4 β-D-mannuronanes, dont le DP est inférieur à environ 30, et de préférence compris entre 2 et 15, en particulier l'oligo 1,4 β-D-mannuronane de DP4, en tant que produits biofertilisants dans le cadre d'applications liées à leur activité d'amplification de l'enzyme xyloglucane endotransglycolase, notamment dans le cadre du contrôle de l'organisation des parois cellulaires au cours de l'expansion des tissus (zones vasculaires ou parenchyme) de certains organes tels que les hypocotyles, les cotylédons, les feuilles, les tubes polliniques, et les fruits, et pour renforcer les parois végétales et les adapter à des stimuli environnementaux tels que le vent, le choc thermique ou hydrique, ou la pression mécanique.

L'invention a également pour objet un procédé d'obtention de plantes dont les étapes d'abscission, de croissance du pistil, ou de maturation des anthères, sont contrôlées dans le temps, par traitement de ces plantes avec des oligo 1,4 β-D-mannuronanes tels que définis ci-dessus.

L'invention a également pour objet un procédé d'obtention de plantes dans lesquelles l'organisation des parois cellulaires au cours de l'expansion des tissus est contrôlée, et dont les parois végétales sont renforcées afin de les adapter à des stimuli environnementaux tels que le vent, le choc thermique ou hydrique, ou la pression mécanique, par traitement de ces plantes avec des oligo 1,4 β-D-mannuronanes tels que définis ci-dessus.

L'invention sera davantage illustrée à l'aide de la description détaillée qui suit de la préparation des polymères 1,4 β-D-glucuronanes et oligosaccharides glycuroniques dérivés selon l'invention, ainsi que de la mise en évidence de leurs propriétés d'amplification de l'enzyme 1,3 β-D-glucanase, et/ou de l'enzyme 1,4 β-D-glucanase.

### A) Préparation des polymères uroniques et/ou de leurs oligosaccharides

L'obtention des polymères 1,4 β-D-glucuronanes fait appel à des procédés de fermentation de souches bactériennes isolées de la rhizosphère (*Rhyzobium, Sinorhyzobium, Agrobactérium, Pseudomonas, Burkolderia* ... ), modifiées ou non par mutations chimiques et/ou manipulations génétiques.

Les polymères 1,4 β D-glucuronanes peuvent être aussi obtenus par oxydation sélective de la cellulose selon des procédés décrits dans différents articles (Painter T.J., 1977, Preparation and periodate oxidation of C-6-oxycellulose: conformational interpretation of hamlacetal stability. Carbohy. Res. 55, 95-103 ; Chang P.S. and Robyt J.F., Oxidation of primary alcohol groups of naturally occuring polysaccharides with 2, 2, 6, 6-tetramethyl-1-piperidine oxoammonium ion.J. Carbohydr. Chem., 15, 819-830 ; Isogai, A and Kato, Y., 1998, Preparation of polyuronic acid from cellulose by TEMPO-mediated oxidation, Cellulose, 5, 153-164)

Le cas échéant, les polymères ainsi obtenus sont modifiés et/ou dégradés par voies chimiques et/ou enzymatiques, en cours de fermentation ou par des traitements post-fermentaires.

### • Polymère 1,4 β-D-glucuronane

A titre d'illustration, le polymère 1,4 β-D-glucuronane est obtenu par fermentation d'une souche mutée de *Rhizobium meliloti,* selon le protocole décrit dans le brevet français FR-B-2 688 222 du 3 mars 1992.

### • Oligomère 1,4-β-D-glucuronane de DP moyen 8

Le polymère précédent natif, c'est à dire comportant au moins 50% d'unités glucuroniques acétylées en C2 et ou C3, est soumis à une hydrolyse enzymatique. L'enzyme est une glucuronate lyase d'origines diverses, notamment extraite de pancréas d'ormeaux, ou d'origine fongique (Dantas L. et al., Carbohydr. Res., 265.(1994) 303-310) ou une glucuronate lyase présente dans le milieu de culture de bactéries telles que les souches de Rhizobiaceae (Michaud P., et al., Int. J. Biol. Macromol. 21 (1997) 3-9). Le mélange d'oligosaccharides ainsi obtenu est déacétylé par traitement basique (NaOH 0,1M), puis fractionné en fonction du degré de polymérisation (DP) par chromatographie de perméation de gel sur colonne de Bio-Gel P6 (Dantas L. et al., susmentionné).

### • Oligomères 1,4 β-D-mannuronane et 1,4 β-D-guluronane de DP 4

Le polymère de départ est un alginate, copolymère linéaire des acides mannuronique (M) et guluronique (G) dont le rapport M/G et le mode d'arrangement dépendent de l'origine. L'alginate est choisi en fonction du type d'oligomères à préparer. L'hydrolyse se fait par voie enzymatique: une alginate-lyase d'ormeau pour les oligo-1,4β-D-mannuronane (Heyraud A. et al., Carbohydr. Res., 291 (1996) 115-126), une alginate-lyase d'origine bactérienne pour les oligo-1,4 β-D-guluronane (brevet FR 97 03218 du 11 mars 1997). Les différents oligosaccharides, séparés selon le DP par chromatographie de perméation de gel, sont ensuite purifiés selon leur structure par chromatographie ionique en chromatographie liquide haute pression selon le procédé décrit dans l'article de Heyraud et al., susmentionné.

Il convient de rappeler que seule l'utilisation d'oligomère -1,4 β-D-mannuronane de DP 4 fait partie de l'invention.

### B) Réponse 1,3-β-D-glucanase induite dans des protoplastes de Rubus.

Conditions expérimentales : (1) préparation de protoplastes à partir de suspensions cellulaires de *Rubus fruticosus* L.; (2) incubation ou non de n échantillons de 2.10⁶ protoplastes en présence "d'éliciteur" (polymères 1,4-β-D-glucuronane et 1,4-β-D-galacturonane (400 µg/L), oligomères 1,4-β-D-glucuronanes de DP moyen 8, 1,4-β-D-mannuronane de DP 4, et 1,4-β-D-guluronane de DP 4 (50 nM); (3) après 20 min, les protoplastes traités ou non font l'objet d'une extraction enzymatique. 2 µg de protéines sont utilisées par essai enzymatique, et par temps d'incubation. La viabilité des protoplastes est maintenu à 95 % pour une durée d'expérimentation de 6h; le test de viabilité au bleu d'Evans utilisé vérifie l'intégrité du plasmalemme.

Méthodologie : la mesure de l'activité (1,3 β-D-glucanase) repose sur le dosage colorimétrique (test au ferricyanure) des unités réductrices du substrat (hexamère réduit de laminarine) libérées au cours de l'hydrolyse. A partir des cinétiques développées, on trace des courbes dont les équations permettent de calculer la vitesse de la réaction enzymatique. 2 cinétiques, au moins, sont développées par échantillon, et par "set" expérimental. En général, 8 cinétiques provenant d'échantillons de 2 "sets " indépendants sont, au moins, développées.

Résultats : l'activation enzymatique dans des protoplastes élicités est exprimée en % de l'activité dans les contrôles. Les résultats sont rapportés dans le tableau récapitulatif 1.

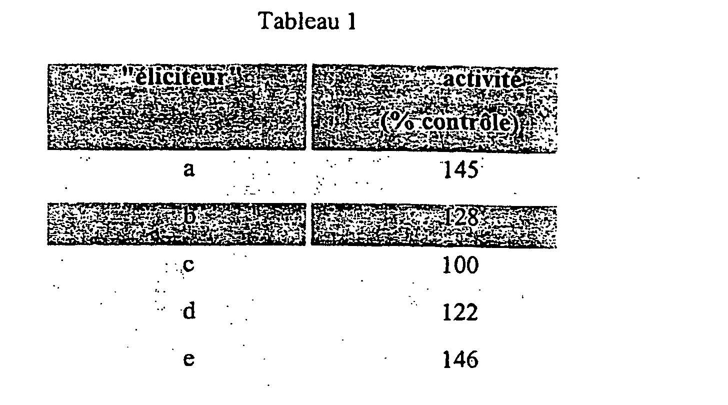

Tableau 1: Analyse comparative des réponses (1,3-β-D-glucanase) induites par "l'éliciteur" (polymère 1,4-β-D-glucuronane (400 µg/L) (a), oligo 1,4-β-D-glucuronane de DP moyen 8 (50 nM) (b), polymère 1,4-β-D-galacturonane (400 µg/L) (c), oligo 1,4-β-D-mannuronane de DP 4 (50 nM) (d), oligo 1,4-β-D-guluronane de DP 4 (50 nM) (e).

L'analyse électrophorétique par SDS-PAGE des protéines composant les extraits enzymatiques a été réalisée. Le marquage de protéines sur empreintes par un sérum reconnaissant des 1,3-β-D-glucanases isolées du tabac contaminé par la mosaïque du tabac (Ori et al. (1990) EMBO J., 9(11), 3429-36) confirme la présence de PR-protéines.

L'oligomère 1,4-β-D-glucuronane de DP moyen 8 et le polyglucuronane, utilisés à une concentration nanomolaire, amplifie en 20 min d'un facteur 1.5 et 1.3 respectivement l'activité 1,3 β-D-glucanase dans des protoplastes végétaux. Parmi les autres produits testés, c'est l'oligo 1,4-β-D-guluronane de DP4 qui est le plus efficace.

### C) Réponse 1,4-β-D-glucanase induite dans des protoplastes de Rubus.

Conditions expérimentales d'élicitation : identiques à celles rapportées ci-dessus.

Méthodologie : la mesure de l'activité (1,4 β-D-glucanase) repose sur le dosage colorimétrique (test au ferricyanure) décrit ci-dessus des unités réductrices du substrat (cellopentaose réduit) libérées au cours de l'hydrolyse.

Résultats : les résultats sont rapportés dans le tableau 2.

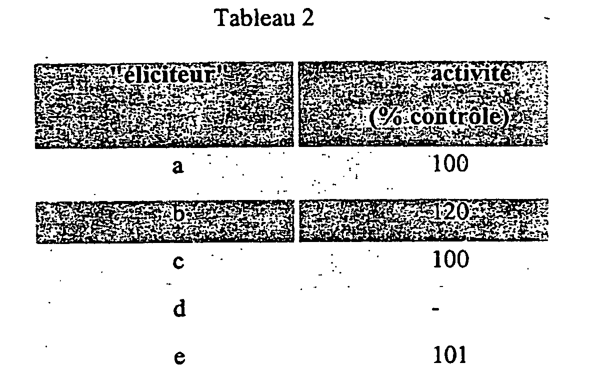

Tableau 2: Analyse comparative des réponses (1,4 β-D-glucanase) induites par "l'éliciteur" (polymère 1,4-β-D-glucuronane (400 µg/L) (a), oligo 1,4-β-D-glucuronane de DP moyen 8 (50 nM) (b), polymère 1,4-β-D-galacturonane (400 µg/L) (c), oligo 1,4-β-D-mannuronane de DP 4 (50 nM) (d), oligo 1,4-β-D-guluronane de DP 4 (50 nM) (e).

L'oligomère 1,4-β-D-glucuronane de DP moyen 8 utilisé à une concentration nanomolaire, amplifie en 20 min d'un facteur 1.2 l'activité 1,4 β-D-glucanase dans des protoplastes végétaux.

### D) Réponse xyloglucane endotransglycosylase induite dans des protoplastes de Rubus.

Conditions expérimentales d'élicitation. 2.10⁶ protoplastes dans 1 ml de tampon Tris-HCI buffer (pH 4.8) sont incubés en présence ou non d'un éliciteur (50 nM) ou d'une hormone (50nM): oligomère mannuronane de DP4 ou oligomère glucuronane de DP8 ou gibbérelline GA₃. Après 20, 40, 60, 100, 120 min d'interaction, les protoplastes sont récupérés par centrifugation, puis soumis à une extraction enzymatique.

Méthodologie : la mesure de l'activité XET s'effectue dans les puits de plaques de microtitration en 4 étapes. Etape 1 : immobilisation de l'accepteur, soit la néoglycoprotéine XXLG ≈ BSA. Étape 2 : introduction du milieu réactionnel (extrait enzymatique XET (équivalent à 1 µg de protéines) substrat marqué DIG, soit XG ≈ DIG dans le tampon Tris-HCI, pH = 7, 25 mM). Étape 3 : immunomarquage selon la séquence anti DIG marqué peroxydase, anti- peroxydase marqué peroxydase. Étape 4 : dosage de l'activité peroxydase dans un tampon citrate-phosphate (50nM, pH 5,5).

L'activité peroxydase se mesure à 492 nm. 3 courbes au moins d'activité peroxydase sont tracées par condition expérimentale, et les expériences sont réalisées à partir de 3 suspensions de protoplastes. L'activité XET est mesurée par la pente (ΔA 492) de la courbe déduite par régression linéaire de 9 courbes de cinétique peroxydase.

### Abréviations :

DIG : digoxygénine
XET : xyloglucane endotransglycosylase - XG : polymère de xyloglucane - XXLG: oligomère non fucosylé de xyloglucane

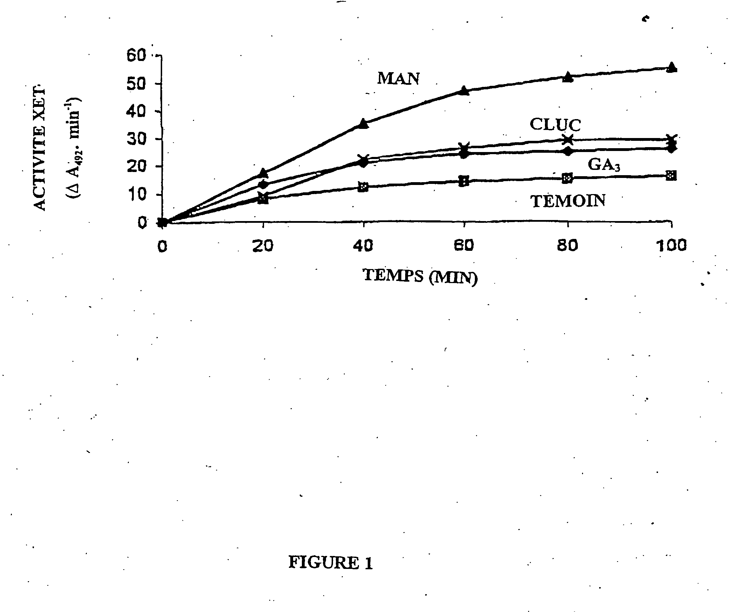

**Résultats :** les résultats sont indiqués dans la figure 1.

L'oligomère mannuronane de DP4 (MAN) induit la réponse XET la plus forte (amplification en 20 min d'un facteur 2.12) l'oligomère glucuronane de DP8 (GLUC) et l'hormone (GA3) sont moins efficaces (amplification en 20 min d'un facteur 1.62 et 1.12 respectivement). L'activité XET de référence est celle des protoplastes non ellicités (TEMOIN).

Légende de la figure 1 : l'activité XET est indiquée en ordonnée en fonction du temps en abscisse ; la courbe suivant les triangles correspond aux résultats obtenus avec l'oligomère mannuronane de DP4 (MAN), la courbe suivant les croix correspond aux résultats obtenus avec l'oligomère glucuronane de DP8 (GLUC), la courbe suivant les ronds correspond aux résultats obtenus avec l'hormone (GA3), la courbe suivant les carrés correspond aux résultats obtenus avec le témoin.

## Revendications

1. Utilisation des oligo 1,4 β-D-mannuronanes, dont le DP est inférieur à environ 30, en tant que :
- produits phytosanitaires pour la protection des plantes contre les pathogènes ou des prédateurs, et l'adaptation des plantes à des teneurs élevées en ozone, dans le cadre de l'activation de la 1,3 β-D-glucanase,
- produits biofertilisants pour le contrôle de l'abscission, de la croissance du pistil ou de la maturation des anthères, le contrôle de l'organisation des parois cellulaires au cours de l'expansion des tissus, et pour renforcer les parois végétales, dans le cadre de l'activation de la 1,3 β-D-glucanase, de la 1,4 β-D-glucanase, et de la xyloglucane endotransglycolase.

2. Utilisation selon la revendication 1, des oligo 1,4 β-D-mannuronanes, dont le DP est compris entre 2 et 15.

3. Utilisation selon la revendication 1 ou 2, de l'oligo 1,4 β-D-mannuronane de DP 4.

4. Utilisation de l'oligo 1,4 β-D-mannuronane de DP4, en tant que produit biofertilisant dans le cadre de l'activation de la xyloglucane endotransglycolase.

5. Utilisation selon la revendication 4, de l'oligo 1,4 β-D-mannuronane de DP4 dans le cadre du contrôle de l'organisation des parois cellulaires au cours de l'expansion des tissus, et/ou pour renforcer les parois végétales et les adapter à des stimuli environnementaux.

6. Procédé d'obtention de plantes résistantes aux pathogènes ou prédateurs, ou adaptées à des teneurs élevées en ozone, par traitement de ces plantes avec des oligo 1,4 β-D-mannuronanes tels que définis dans l'une des revendications 1 à 3.

7. Procédé d'obtention de plantes dont les étapes d'abscission, de croissance du pistil, ou de maturation des anthères sont contrôlées, par traitement de ces plantes avec des oligo 1,4 β-D-mannuronanes tels que définis dans l'une des revendications 1 à 3.

8. Procédé d'obtention de plantes dans lesquelles l'organisation des parois cellulaires au cours de l'expansion des tissus est contrôlée, et dont les parois végétales sont renforcées afin de les adapter à des stimuli environnementaux, par traitement de ces plantes avec des oligo 1,4 β-D-mannuronanes tels que définis dans l'une des revendications 1 à 3.

## Patentansprüche

1. Verwendung von Oligo-1,4-β-D-mannuronanen, deren DP unter etwa 30 liegt, als:
- phytosanitäre Produkte zum Schutz von Pflanzen gegen Pathogene oder Schädlinge und zur Adaptation von Pflanzen an erhöhte Ozongehalte, im Rahmen der Aktivierung der 1,3-β-D-Glucanase,
- biologische Düngemittel zur Regulierung der Abszission, des Pistillwachstums oder der Antherenreifung, zur Regulierung der Organisation der Zellwände bei der Gewebeexpansion und zur Verstärkung der Pflanzenwände, im Rahmen der Aktivierung der 1,3-β-D-Glucanase, der 1,4-β-D-Glucanase und der Xyloglucan-endotransglycolase.

2. Verwendung nach Anspruch 1 der Oligo-1,4-β-D-mannuronane, deren DP zwischen 2 und 15 liegt.

3. Verwendung nach Anspruch 1 oder 2 des Oligo-1,4-β-D-mannuronans mit DP 4.

4. Verwendung des Oligo-1,4-β-D-mannuronans mit DP 4 als Biodünger im Rahmen der Aktivierung der Xyloglucan-endotransglycolase.

5. Verwendung nach Anspruch 4 des Oligo-1,4-β-D-mannuronans mit DP 4 im Rahmen der Regulierung der Organisation der Zellwände bei der Gewebeexpansion und/oder zur Verstärkung der Pflanzenwände und zur Adaptation an Umgebungsreize.

6. Verfahren zur Gewinnung von Pflanzen, die gegen Pathogene oder Schädlinge resistent sind oder die an erhöhte Ozongehalte adaptiert sind, durch Behandlung der Pflanzen mit Oligo-1,4-β-D-mannuronanen, wie sie in einem der Ansprüche 1 bis 3 definiert sind.

7. Verfahren zur Gewinnung von Pflanzen, deren Etappen der Abszission, des Pistillwachstums oder der Antherenreifung reguliert sind, durch Behandlung der Pflanzen mit Oligo-1,4-β-D-mannuronanen, wie sie in einem der Ansprüche 1 bis 3 definiert sind.

8. Verfahren zur Gewinnung von Pflanzen, bei denen die Organisation der Zellwände bei der Gewebeexpansion reguliert ist und deren Pflanzenwände verstärkt sind, um sie an Umweltreize zu adaptieren, durch Behandlung der Pflanzen mit Oligo-1,4-β-D-mannuronanen, wie sie in einem der Ansprüche 1 bis 3 definiert sind.

## Claims

1. The use of oligo 1,4 β-D-mannuromans, whose DP is less than about 30, as :
* phytosanitary products for the protection of plants against pathogens or predators, and for the adaptation of plants to high ozone levels, within the framework of the activation of 1,3 β-D-glucanase,
* biofertilizers for the control of abscission, of growth of the pistil or of maturation of the anthers, the control of the organization of cell walls during expansion of the tissues, and for reinforcing the plant cell walls, within the framework of the activation of 1,3 β-D-glucanase, 1,4 β-D-glucanase, and xyloglucan endotransglycolase.

2. The use according to claim 1 of oligo 1,4 β-D-mannuromans, whose DP is between 2 and 15.

3. The use according to claim 1 or 2 of the oligo 1,4 β-D-mannuronan of DP4.

4. The use of the oligo 1,4 β-D-mannuronan of DP4, as a biofertilizer within the framework of the activation of xyloglucan endotransglycolase.

5. The use according to claim 4 of the oligo 1,4 β-D-mannuronan of DP4 within the framework of the control of the organization of cell walls during expansion of the tissues, and / or to reinforce the plant cell walls and adapt them to environmental stimuli.

6. A method for obtaining plants that are resistant to pathogens or predators or adapted to high ozone levels, by treating these plants with oligo 1,4 β-D-mannuromans such as defined in one of claims 1-3.

7. A method for obtaining plants whose stages of abscission, growth of the pistil or maturation of the anthers are controlled, by treating these plants with oligo 1,4 β-D-mannuromans such as defined in one of claims 1-3.

8. A method for obtaining plants in which the organization of cell walls during expansion of the tissues is controlled, and whose plant cell walls are reinforced so as to adapt them to environmental stimuli, by treating these plants with oligo 1,4 β-D-mannuromans such as defined in one of claims 1-3.
